(19) Europäisches Patentamt
European Patent Office
Office européen des brevets

(11) **EP 1 954 518 B1**

(12) **EUROPEAN PATENT SPECIFICATION**

(45) Date of publication and mention
of the grant of the patent:
**20.10.2010  Bulletin 2010/42**

(21) Application number: **05813365.3**

(22) Date of filing: **02.12.2005**

(51) Int Cl.:
**B60K 23/08** (2006.01)

(86) International application number:
**PCT/EP2005/056434**

(87) International publication number:
**WO 2007/062693 (07.06.2007 Gazette 2007/23)**

(54) **METHOD AND SYSTEM FOR REGULATING VEHICLE DYNAMICS**

VERFAHREN UND SYSTEM ZUR FAHRDYNAMIKREGELUNG

PROCEDE ET SYSTEME DE REGULATION DE LA DYNAMIQUE D'UN VEHICULE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.08.2008  Bulletin 2008/33**

(73) Proprietor: **Haldex Traction AB**
**261 24 Landskrona (SE)**

(72) Inventor: **DRENTH, Edo**
**S-254 50 Helsingborg (SE)**

(74) Representative: **Petri, Stellan**
**Ström & Gulliksson AB,**
**P.O. Box 4188**
**203 13 Malmö (SE)**

(56) References cited:
**DE-A1- 10 235 377     DE-A1- 10 344 969**
**DE-A1- 19 513 516**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

This invention pertains in general to the field of vehicle dynamics. More particularly the invention relates to regulating the driving dynamics of a vehicle, and even more particularly to a method of regulating the driving dynamics of a vehicle by controlling a torque distribution from a vehicle engine between at least two axles of the vehicle.

**Background of the Invention**

Torque distributors for vehicles are known as a piece of hardware, e.g. for four wheel drive vehicles, that is placed between the gearbox output and the both propelled axles of a two-axled vehicle. This hardware ensures that the total torque capacity between the gearbox output and both axles is always larger than the maximum torque output from the gearbox. Simultaneously, the torque between front and rear axle can be varied freely while maintaining always one clutch locked or in a so-called synchronous state. The exception is when the double clutch device is used as a declutch mechanism for gear shifting as well.

For instance WO 2005/035294 discloses such a hardware. More precisely, a drive train and a method for controlling and regulating the drive train of a vehicle are disclosed in WO 2005/035294. A gear-box is interposed between a vehicle engine and two vehicle axles. One controlled and regulated clutch each is provided between the gear-box and the vehicle axles, wherein the transmissibility of the regulated clutches can be adjusted via an actuator system. In this way a driving torque is distributed between the vehicle axles depending on the adjusted torque transmissibility of the two clutches. The transmissibilities of the clutches can be adjusted by means of the actuator system in such a manner that a clutch can be operated in a slip mode while the other clutch can be maintained in a generally synchronous state, thereby distributing the driving torque between the axles. The disclosure mentions only a mechanical arrangement that may be used for distributing the torque between the axles. Those skilled in the art understand that the torque distribution between the axles influences the driving dynamics of a vehicle. It is not disclosed how this distribution may be controlled in an efficient way in order to provide advantageous characteristics of the vehicles' driving dynamics.

Thus, there is a need for a method of regulating the driving dynamics of a vehicle by controlling a torque distribution from a vehicle engine between at least two axles of the vehicle, for instance by controlling a torque distribution controller as disclosed in WO 2005/035294.

WO 2005/073011 discloses a method for controlling a motor vehicle torque transmitting clutch whose coupling state determines the distribution ratio of a drive torque between a first and a second wheel arrangement of the vehicle. At least one operating parameter of the vehicle different from a velocity of the vehicle is monitored with regard to a predetermined condition, which is representative of an acceleration process that is initiated by a vehicle driver and results in an increased vehicle speed. When an acceleration process is recognized, the clutch is placed in a fixed predetermined acceleration coupling state. The engine torque, which is provided by a driving engine of the vehicle, and/or the position of an accelerator pedal of the vehicle are/is preferably used as a representative operating parameter for recognizing an acceleration process. However, the method disclosed in WO 2005/073011 only takes into consideration that a longitudinal acceleration takes place and is hence very limited from a vehicle dynamics control perspective, as for instance cornering or deceleration conditions are not considered at all.

US-4,966,249 discloses an active torque distribution control over four wheels of a motor vehicle. A longitudinal acceleration and a side acceleration which the vehicle is subject to are detected by means of two acceleration sensors. Based on these longitudinal and side accelerations measured by the sensors, a running mode which the vehicle is involved in is detected, and a torque distribution ratio of a portion of torque delivered to the front wheels to the remaining portion to the rear wheels and a differential limiting force is varied in response to a predetermined control schedule for the running mode detected. However, the system disclosed needs acceleration sensors as mentioned-above, which is a major disadvantage as any additional piece of equipment, i.e. the acceleration sensors only used for the vehicle dynamics, are prone to errors and expensive. Furthermore the disclosure of US-4,966,249 deals with a single clutch device, limiting the vehicle dynamics control for distributing the drive torque.

A further example of the prior art is DE 102 35 377.

Hence, an improved method of regulating the driving dynamics of a vehicle by controlling a torque distribution from a vehicle engine between at least two axles of the vehicle would be advantageous, and in particular allowing for increased flexibility and cost-effectiveness would be advantageous.

**Summary of the Invention**

Accordingly, the present invention preferably seeks to mitigate, alleviate or eliminate one or more of the above-identified deficiencies in the art and disadvantages singly or in any combination and solves at least the above mentioned problems by providing a method for regulating the driving dynamics of a vehicle by controlling a torque distribution from a vehicle engine between at least two axles of the vehicle, according to the appended patent claims.

This invention allows for an overall control of a torque distribution controller within a vehicle dynamics perspective.

According to one aspect of the invention, a method for regulating the driving dynamics by controlling a torque distribution from a vehicle engine between at least two axles of the vehicle of a vehicle is provided, wherein the method comprises controlling the torque distribution with a nominal velocity difference between the different axles as an input value.

The present invention has the advantage over the prior art that it provides an advantageous way of regulating the driving dynamics of a vehicle. More precisely some embodiments of the invention allow for avoiding traction problems of vehicles.

## Brief Description of the Drawings

These and other aspects, features and advantages of which the invention is capable of will be apparent and elucidated from the following description of an embodiment of the present invention, reference being made to the accompanying drawings, in which

Figure 1 is a schematic overview of velocity vectors at tire contact points in an ISO coordinate system, and
Figure 2 is a schematic view of an exemplary drive train for implementing the present invention.

## Description of embodiments

The following description focuses on an embodiment of the present invention applicable to a two-axled, four wheel drive car. However, it will be appreciated that the invention is not limited to this application but may be applied to many other vehicles, including for example trucks. In addition such vehicles may have more than two axles.

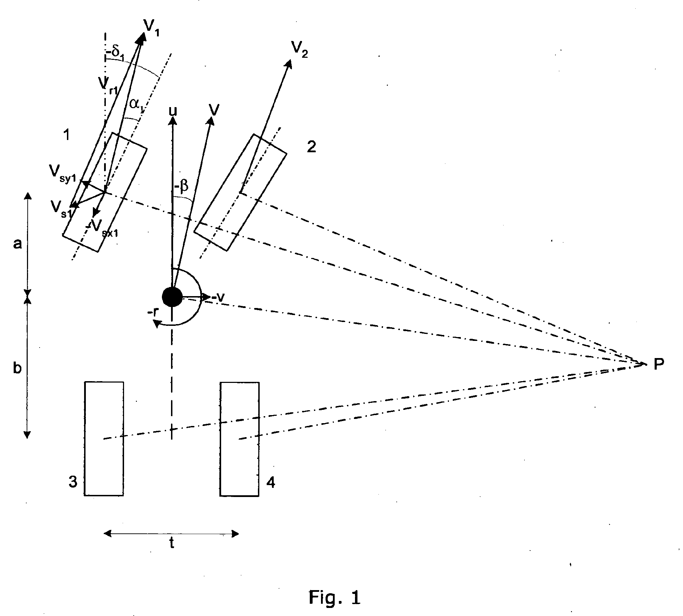

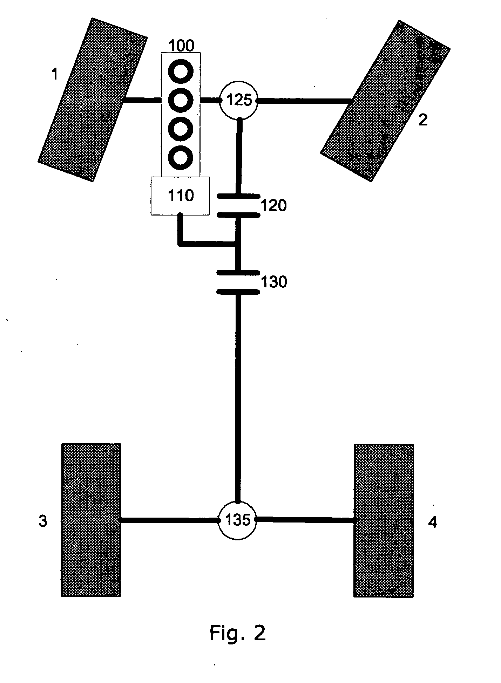

Figure 2 is a schematic view of an exemplary drive train for implementing the present invention. In the figure, a two-axled all wheel driven vehicle is schematically depicted. The vehicle has a front left wheel 1, a front right wheel 2, a rear left wheel 3, and a rear right wheel 4. Torque from an engine 100 is transmitted to a gearbox 110 and further to a torque distributor placed between the gearbox 110 output and both the propelled axles of the two-axled vehicle. The drive train further comprises a first clutch 120 between gearbox and front axle and a second clutch 130 between gearbox and rear axle. This hardware ensures that the total torque capacity between the gearbox output and both axles is always larger than the maximum torque output from the gearbox. Simultaneously, the torque between front and rear axle may be varied freely while maintaining always one clutch locked or in a so-called synchronous state. An exception is when the double clutch device is used as a declutch mechanism for gear shifting as well. Further, the drive train comprises a front differential 125 and a rear differential 135. Figure 1, explained below, is a schematic overview of velocity vectors of a vehicle having such a drive train, using the same reference signs, where appropriate.

Torque distribution systems, such as shown in Fig. 2 or the above-mentioned double coupling disclosed in PCT2005035294-A1, can if circumstances allow, freely vary the torque distribution between front and rear axle. However, the vehicle's state may not always allow a transition from one state of the double coupling to another because the actual axle velocity difference induced by the vehicle's state is too large at the time and state transition may imply Noise, Vibrations and Harshness (NVH) problems. State of double coupling means in this context that the front or the rear axle is synchronously connected to the gearbox output by locking one of the two couplings and the torque transmission of the other coupling is controlled by slipping the clutch. From a vehicle dynamics perspective both states have to be used in order to be able to distribute propelling torque to the front and the rear axle. For instance in a tight curve at low speed, the system has to drive primarily the front axle and the torque transferred to the rear axle is enabled by means of a controlled torque capacity over the rear clutch, which is slipping. On the other hand, at cornering beyond a certain speed, the rear axle has to be driven primarily in order to ensure freely distributed propelling torques.

The inventor has realized that the vehicle dynamic's state at these elevated velocities results in a nominal different velocity between the front and rear differentials, which is higher at the rear than in the front, i.e. it has an opposite sign at low speed cornering.

Embodiments of the present invention hence relate to a control method that, with help from signals from existing vehicle systems, such as other electronic control units (ECU's) like Anti-Locking Braking System (ABS), Electronic Stability Program (ESP), and engine management, determines the vehicle state and the most adequate control mode of the double coupling device.

According to one embodiment of the invention, the nominal velocity difference between both differentials is computed by using signals from the ABS/ESP unit and engine management with a reference model in the electronic control unit of the double coupling device. The Electronic Control Unit of the double coupling device may according to some embodiments be located physically on the double coupling device, pr according to other embodiments the method may be implemented in software run on hardware of existing electronic control units, e.g. the Electronic Control Unit of the ABS/ESP.

The nominal velocity difference is used as a base signal to determine the control state of the double coupling device or equivalent torque distribution devices as mentioned above. Two base control states can be distinguished, primarily Front Wheel Drive (FWD) and primarily Rear Wheel Drive (RWD). Primarily FWD implies a synchronous state of the gearbox output and the front differential. A primarily Rear Wheel Drive (RWD) state implies a synchronous state of the gearbox output and the rear differential. Of course, a state transition may only take place when the actual difference velocity allows this in respect to Noise, Vibrations and Harshness (NVH) issues. That is, the actual difference velocity shall be low.

With reference to Fig. 1, the free rolling nominal velocity difference between the axles is defined as:

$$\Delta V = V_{F_x}^W - V_{R_x}^W = \begin{bmatrix} \cos\delta - 1 & \sin\delta & a\sin\delta \end{bmatrix} \begin{bmatrix} u \\ v \\ r \end{bmatrix} \qquad (1)$$

wherein

$\Delta V$    Velocity difference between axle differentials
    Longitudinal velocity of front axle (velocity of front differential)
    Longitudinal velocity of rear axle (velocity of rear differential)

Other variables see below under nomenclature.

In the above formula (1) the longitudinal, lateral and yaw velocity are assumed known signals by means of measurement, which is done by deriving the velocity signals from existing sensors, or estimation techniques. There is no need for additional acceleration sensors dedicated for the single purpose of delivering signals for the present vehicle dynamics regulation method. The signal quality and accuracy is beyond the scope of this invention. The axle velocity difference $\Delta V$ may be transformed to angular velocity difference over the double coupling device including possibly mechanical different final gear ratios. According to one embodiment, it is the sign of velocity difference between the both outgoing shafts from the double coupling device that determines the possible control state, which may be altered by mechanical gear ratio difference of the final drives in the front and rear axle. In a specific embodiment described now, the use of this velocity difference is explained in more detail.

More precisely, an exemplary embodiment of the invention is as follows:

1. A reference model in conjunction with measured signals is used to compute a nominal velocity difference between the front and rear differential. This nominal velocity difference is one of the signals that determines the control state of the double coupling device.
2. The result of a reference model and measured signals determines the control state that always allows drive torques to all driven wheels. Drive torques are ensured as long as the slippage over the clutch that is not in a synchronous state is positive. That is, the input shaft (from gearbox) runs faster than the output shaft (to axle differentials).
3. The choice of control state avoids the (traction) control problems for Rear Wheel Drive (RWD) based "hang-on" vehicles in tight corners in the low range of the velocity envelope and thus poor off-road capabilities. In tight corners the front axle has a larger curve radius than the rear axle and thereby.has to run faster than the rear axle. The nominal fastest axle shall run synchronous with the gearbox output in order to comply with the present embodiment
4. The choice of control state avoids the power-on under-steering problems of a FWD based "hang-on" vehicle at cornering in the midrange of the velocity envelope (50-120 km/h). Beyond a certain speed the rear axle will run a larger curve radius than the front axle. Therefore the rear axle shall run synchronous at these elevated velocities to ensure drive torques at all wheels without excessive slip at one of the front wheels. This is ensured by using the above-described nominal velocity difference as an input parameter for controlling the state of the double coupling.

Applications and use of the above described method and system for regulating the driving dynamics of a vehicle according to the invention are various and include exemplary fields such as four wheel driven (4WD) cars and trucks

The invention may be implemented in any suitable form including hardware, software, firmware or any combination of these. However, preferably, the invention is implemented as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units and processors.

Although the present invention has been described above with reference to a specific embodiment, it is not intended to be limited to the specific form set forth herein. Rather, the invention is limited only by the accompanying claims, and other embodiments than the specific one above are equally possible within the scope of these appended claims, e.g. different coupling devices than those described above.

In the claims, the term "comprises/comprising" does not exclude the presence of other elements or steps. Furthermore, although individually listed, a plurality of means, elements or method steps may be implemented by e.g. a single unit or processor. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc do not preclude a plurality. Reference signs in the claims are provided merely as a clarifying example and shall not be construed as limiting the scope of the claims in any way.

Nomenclature

a       Distance from front axle to cog
b       Distance from rear axle to cog
1       Wheelbase
r       Yaw velocity
r       As index: circumferential
s       As index: slip
t       Track width
u       Longitudinal velocity
v       Lateral velocity
x       As index: longitudinal
y       As index: lateral
F       Front
R       Rear
P       Pole of vehicle velocity (curve centre)
V       Velocity vector
W       Wheel coordinate system

$\alpha$       Slip angle
$\beta$       Vehicle slip angle
$\delta$       Steer angle

**Claims**

1.  A method of regulating the driving dynamics of a vehicle by controlling a torque distribution in a drive system from a vehicle engine between at least two axles of the vehicle, comprising
    controlling said torque distribution with a nominal velocity difference between the different axles as an input value and calculating said nominal velocity difference between axle differentials by using signals from an ABS/ESP unit of the vehicle and engine management with a reference model in an electronic control unit of a double coupling device distributing the torque.

2.  The method according to claim 1, wherein the vehicle has two axles, each axle having two hubs at opposite sides thereof and a differential in-between, respectively, wherein the nominal velocity difference is a nominal velocity difference between the front and rear differentials.

3.  The method according to claim 2, wherein said calculating and controlling being performed in an Electronic Control Unit of the double coupling device.

4. The method according to claim 3, wherein said calculating and controlling being performed in an already existing Electronic Control Unit of the vehicle.

5. The method according to any preceding claim, wherein the nominal velocity difference is used as a base signal to determine the control state of a torque distribution device controlling the torque distribution from the vehicle engine between said at least two axles of the vehicle.

6. The method according to claim 5 for a vehicle with a front axle and a rear axle, wherein said control state comprises two base control states being a primarily Front Wheel Drive (FWD) control state comprising a synchronous state of a gearbox output from the engine and a front differential at the front axle, and a primarily Rear Wheel Drive (RWD) control state comprising a synchronous state of a gearbox output from the engine and a rear differential at the rear axle.

7. The method according to claim 6, comprising using a reference model of the vehicle in conjunction with measured signals to compute the nominal velocity difference between a front and rear differential for determining said control state of the torque distribution device, wherein the result of the reference model and measured signals determines a control state that always allows drive torques to all driven wheels.

8. The method according to claim 6 or 7, comprising locking the nominally fastest axle to run at a synchronous state with the output of the gearbox of the vehicle, such that traction control problems are avoided.

9. The method according to any previous claim, wherein said nominal velocity difference is a free rolling nominal velocity difference between two axles of a four wheel driven vehicle defined as:

$$\Delta V = V_{F_x}^{W} - V_{R_x}^{W} = \begin{bmatrix} \cos\delta - 1 & \sin\delta & a\sin\delta \end{bmatrix} \begin{bmatrix} u \\ v \\ r \end{bmatrix},$$

wherein

$\Delta V$ is a velocity difference between a front and rear axle differential,

$V_{F_x}^{W}$ is a longitudinal velocity of the front axle or velocity of a front differential,

$V_{R_x}^{W}$ is a longitudinal velocity of rear axle or velocity of a rear differential, u Longitudinal velocity

u is a longitudinal velocity of the vehicle,
v is a lateral velocity of the vehicle,
r is a yaw velocity of the vehicle,
$\alpha$ is a slip angle, and
$\alpha$ $\delta$ is a steer angle of the vehicle.

10. The method according to claim 9, wherein said input parameters for calculating said velocity difference are derived from signals delivered by existing components of the vehicle or estimation techniques.

**Patentansprüche**

1. Verfahren zur Fahrdynamikregelung eines Fahrzeuges durch Steuerung einer Drehmomentverteilung in einem Antriebssystem eines Fahrzeugmotors zwischen wenigstens zwei Achsen des Fahrzeuges, das Folgendes umfasst:

Steuerung der Drehmomentverteilung mit einer nominalen Geschwindigkeitsdifferenz zwischen den verschiedenen Achsen als einen Inputwert und
Berechnung der nominalen Geschwindigkeitsdifferenz zwischen Achsdifferentialen unter Verwendung von Signalen einer ABS/ESP Einheit des Fahrzeug- und Motormanagements mit einem Referenzmodell in einer elektronischen Steuereinheit einer Doppelkupplungsvorrichtung, die das Drehmoment verteilt.

2. Verfahren nach Anspruch 1, wobei das Fahrzeug zwei Achsen aufweist, jede Achse mit zwei an gegenüberliegenden Achsseiten angeordneten Naben ausgestattet ist und jeweils zwischen den Naben ein Differential angeordnet ist, wobei es sich bei der nominalen Geschwindigkeitsdifferenz um eine nominale Geschwindigkeitsdifferenz zwischen dem vorderen und dem hinteren Differential handelt.

3. Verfahren nach Anspruch 2, wobei die Berechnung und Steuerung in einer elektronischen Steuereinheit der Doppelkupplungsvorrichtung durchgeführt wird.

4. Verfahren nach Anspruch 3, wobei die Berechnung und Steuerung in einer bereits bestehenden elektronischen Steuereinheit des Fahrzeuges durchgeführt wird.

5. Verfahren nach einem der vorhergehenden Ansprüche, wobei die nominale Geschwindigkeitsdifferenz als Basissignal verwendet wird, um den Steuerungszustand einer Drehmomentverteilungsvonichtung zu bestimmen, die die Drehmomentverteilung des Fahrzeugmotors zwischen den wenigstens zwei Achsen des Fahrzeuges steuert.

6. Verfahren nach Anspruch 5, für ein Fahrzeug mit einer vorderen Achse und einer hinteren Achse, wobei der Steuerungszustand zwei Basis-Steuerungszustände umfasst, d. h. einen hauptsächlichen Vorderradantrieb (FWD) Steuerungszustand umfassend einen Synchronzustand eines Getriebeausgangs des Motors und eines vorderen Differentials an der vorderen Achse und einen hauptsächlichen Hinterradantrieb (RWD) Steuerungszustand umfassend einen Synchronzustand eines Getriebeausgangs des Motors und eines hinteren Differentials an der hinteren Achse.

7. Verfahren nach Anspruch 6, das Folgendes umfasst: Verwendung eines Referenzmodells des Fahrzeuges zusammen mit Messsignalen, zur Berechung der nominalen Geschwindigkeitsdifferenz zwischen einem vorderen Differential und einem hinteren Differential, zur Bestimmung des Steuerungszustandes der Drehmomentverteilungsvorrichtung, wobei das Ergebnis des Referenzmodells und der Messsignale einen Steuerungszustand bestimmt, der allen angetriebenen Räder jederzeit Antriebsdrehmomente ermöglicht.

8. Verfahren nach Anspruch 6 oder 7, umfassend ein Sperren der nominal schnellsten Achse, um diese in einem Synchronzustand mit dem Getriebeausgang des Fahrzeuges zu betreiben, derart, dass Tralctionssteuerprobleme vermieden werden.

9. Verfahren nach einem der vorhergehenden Ansprüche, wobei es sich bei der nominalen Geschwindigkeitsdifferenz um eine freirollende nominale Geschwindigkeitsdifferenz zwischen zwei Achsen eines Fahrzeuges mit Vierrad-Antrieb handelt, die wie folgt definiert wird:

$$\Delta V = V_{F_X}^W - V_{R_X}^W = \begin{bmatrix} \cos\delta - 1 & \sin\delta & \alpha\sin\delta \end{bmatrix} \begin{bmatrix} u \\ v \\ r \end{bmatrix},$$

wobei

$\Delta V$ eine Geschwindigkeitsdifferenz zwischen einem vorderen und einem hinteren Achsdifferential,
 eine Längsgeschwindigkeit der vorderen Achse oder Geschwindigkeit eines vorderen Differentials,
 eine Längsgeschwindigkeit der hinteren Achse oder Geschwindigkeit eines hinteren Differentials,
u eine Längsgeschwindigkeit eines Fahrzeuges,
v eine Quergeschwindigkeit eines Fahrzeuges,
r eine Giergeschwindigkeit eines Fahrzeuges,
$\alpha$ einen Schräglaufwinkel und
$\delta$ Lenkwinkel eines Fahrzeuges darstellt.

10. Verfahren nach Anspruch 9, wobei die Inputparameter zur Berechnung der Geschwindigkeitsdifferenz aus Signalen abgeleitet werden, die durch bestehende Komponenten des Fahrzeuges oder Schätzungsmethoden gewonnen werden.

**Revendications**

1. Procédé de régulation de la dynamique de conduite d'un véhicule au moyen de la commande de la distribution de couple dans un système d'entraînement d'un moteur automobile entre au moins deux essieux du véhicule, comprenant les étapes consistant en

   la commande de ladite distribution de couple avec une différence de vitesse nominale entre les différents essieux en tant que valeur d'entrée et

   le calcul de ladite différence de vitesse nominale entre les différentiels d'essieu en utilisant les signaux provenant d'une unité ABS/ESP du véhicule et la gestion du moteur avec un modèle de référence dans une unité de commande électronique d'un dispositif à double couplage distribuant le couple.

2. Procédé selon la revendication 1, dans lequel le véhicule est équipé de deux essieux, chaque essieu étant pourvu de deux moyeux sur ses côtés opposés et d'un différentiel en son centre, respectivement, la différence de vitesse nominale étant une différence de vitesse nominale entre les différentiels avant et arrière.

3. Procédé selon la revendication 2, dans lequel ledit calcul et ladite commande sont effectués dans une unité de commande électronique du dispositif à double couplage.

4. Procédé selon la revendication 3, dans lequel ledit calcul et ladite commande sont effectués dans une unité de commande électronique du véhicule déjà existante.

5. Procédé selon l'une quelconque des revendications précédentes, dans lequel la différence de vitesse nominale est utilisée en tant que signal de base afin de déterminer l'état de commande d'un dispositif de distribution de couple commandant la distribution de couple du moteur du véhicule entre lesdits au moins deux essieux du véhicule.

6. Procédé selon la revendication 5 destiné à un véhicule équipé d'un essieu avant et d'un essieu arrière, dans lequel ledit état de commande comprend deux états de commande de base, à savoir un état de commande principalement de la traction avant (FWD) comprenant un état synchrone d'une sortie de boîte de vitesses du moteur ainsi qu'un différentiel avant sur l'essieu avant et un état de commande principalement de la propulsion arrière (RWD) comprenant un état synchrone d'une sortie de boîte de vitesses du moteur et un différentiel arrière sur l'essieu arrière.

7. Procédé selon la revendication 6, comprenant l'utilisation d'un modèle de référence du véhicule en association avec les signaux mesurés en vue de calculer la différence de vitesse nominale entre un différentiel avant et arrière afin de déterminer ledit état de commande du dispositif de distribution de couple, le résultat du modèle de référence et des signaux mesurés déterminant un état de commande qui permet toujours d'obtenir des couples d'entraînement pour toutes les roues motrices.

8. Procédé selon la revendication 6 ou 7, comprenant

   le verrouillage de l'essieu le plus rapide en termes de valeur nominale afin qu'il fonctionne de façon synchrone avec la sortie de la boîte de vitesses du véhicule, de manière à éviter les problèmes de commande de traction.

9. Procédé selon l'une quelconque des revendications précédentes, dans lequel ladite différence de vitesse nominale est une différence de vitesse nominale de roulement libre entre deux essieux d'un véhicule à quatre roues motrices définie comme suait :

$$\Delta V = V_{F_s}^{W} - V_{R_s}^{W} = \begin{bmatrix} \cos\delta - 1 & \sin\delta & a\sin\delta \end{bmatrix} \begin{bmatrix} u \\ v \\ r \end{bmatrix},$$

où

$\Delta V$ est une différence de vitesse entre un différentiel d'essieu avant et arrière,

$V_{F_x}$ est une vitesse longitudinale de l'essieu avant ou la vitesse d'un différentiel avant,

$V_{R_x}^{av}$ est une vitesse longitudinale de l'essieu arrière ou la vitesse d'un différentiel arrière,

u est une vitesse longitudinale du véhicule,
v est une vitesse latérale du véhicule,
r est une vitesse de lacet du véhicule,
$\alpha$ est un angle de glissement, et
$\delta$ est un angle de braquage du véhicule.

10. Procédé selon la revendication 9, dans lequel lesdits paramètres d'entrée permettant de calculer ladite différence de vitesse proviennent de signaux fournis par les composants existants du véhicule ou de techniques d'estimation.

Fig. 1

Fig. 2

**EP 1 954 518 B1**

**Patent documents cited in the description**

- WO 2005035294 A
- WO 2005073011 A

- US 4966249 A
- DE 10235377